# EUROPEAN PATENT APPLICATION

(11) **EP 4 794 072 A1**
(43) Date of publication of application: **19.08.2026**
(21) Application number: 24924456.7
(22) Date of filing: 17.04.2024
(51) Int. Cl.: H01M 50/133, H01M 50/131, H01M 50/103, H01M 50/15, H01M 50/209, H01M 50/249

(54) **BATTERY CELL, BATTERY, ELECTRIC DEVICE, AND ENERGY STORAGE APPARATUS**

(30) Priority: 18.02.2024 CN 202420292359 U
(71) Applicant: Contemporary Amperex Technology Co., Limited, Ningde, Fujian 352100 (CN)
(72) Inventor: SU, Huasheng, Ningde, Fujian 352100 (CN); LIN, Denghua, Ningde, Fujian 352100 (CN); YANG, Xiao, Ningde, Fujian 352100 (CN); CAO, Mengkai, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Lorenz Seidler Gossel Part. mbB
(86) International application number: PCT/CN2024/088370
(87) International publication number: WO 2025/171690

(57) **Abstract**

A battery cell (20), a battery (100), an electric device, and an energy storage apparatus. The battery cell (20) comprises a casing (21). The casing (21) comprises a shell (211) and an end cover (212). An opening (211a) is formed in the shell (211). The shell (211) comprises a first wall (24). The first wall (24) comprises a first opening part (241) and a first body part (242) sequentially arranged in a first direction (Z). The first direction (Z) is parallel to the thickness direction of the end cover (212). The first opening part (241) is close to an opening (211a) with respect to the first body part (242). The end cover (212) is welded to the first opening part (241) to seal the opening (211a). The first opening part (241) comprises a plurality of first thickening areas (241a) and at least one first transition area (241b). The plurality of first thickening areas (241a) are arranged at intervals in a circumferential direction of the opening (211a). Two adjacent first thickening areas (241a) are connected by means of the first transition area (241b). The maximum thickness of the first thickening areas (241a) is greater than the thickness of the first body part (242), and the maximum thickness of the first thickening areas (241a) is greater than the thickness of the first transition area (241b). The present application can improve the reliability of the battery cell (20).

## Description

### CROSS-REFERENCE TO RELATED APPLICATIONS

The present application claims priority to Chinese Patent Application CN202420292359.X, filed on February 18, 2024 and entitled "BATTERY CELL, BATTERY, ELECTRIC DEVICE, AND ENERGY STORAGE APPARATUS", the entire contents of which are incorporated herein by reference.

### TECHNICAL FIELD

The present application relates to the field of battery technologies, and in particular, to a battery cell, a battery, an electric device, and an energy storage apparatus.

### BACKGROUND

Energy conservation and emission reduction are crucial to the sustainable development of the automotive industry, and electric vehicles have become an important part of the sustainable development of the automotive industry due to their advantages in energy conservation and environmental protection. For electric vehicles, battery technology is an important factor in connection with their development.

In the manufacturing process of batteries, the reliability of the battery is an issue that cannot be ignored. Therefore, how to improve the reliability of batteries is a technical problem that urgently needs to be solved in the battery technology.

### SUMMARY

The present application provides a battery cell, a battery, an electric device, and an energy storage apparatus, which can improve the reliability of the battery cell.

The technical solutions of the present application are implemented as follows:

According to a first aspect, embodiments of the present application provide a battery cell, where the battery cell includes a housing; the housing includes a housing body and an end cover; the housing body has an opening; the housing body includes a first wall; the first wall includes a first opening portion and a first body portion sequentially arranged along a first direction; the first direction is parallel to a thickness direction of the end cover; the first opening portion is closer to the opening than the first body portion; and the end cover is welded to the first opening portion to seal the opening; where the first opening portion includes a plurality of first thickened regions and at least one first transition region; the plurality of first thickened regions are spaced apart along a circumferential direction of the opening; two adjacent first thickened regions are connected to each other through the first transition region; and a maximum thickness of the first thickened region is greater than a thickness of the first body portion, and the maximum thickness of the first thickened region is greater than a thickness of the first transition region.

In the battery cell according to the embodiments of the present application, the plurality of first thickened regions are spaced apart along the circumferential direction of the opening, the maximum thickness of the first thickened region is greater than the thickness of the first body portion, and the first thickened region is a thickened region of the first opening portion. This can improve the strength of the first opening portion, improve the strength of the first wall, reduce the risk of cracking in a region of the housing body near a welding position between the housing body and the end cover, and improve the reliability of the battery cell. In addition, the plurality of first thickened regions are spaced apart along the circumferential direction of the opening, which can reduce the difficulty of demolding the housing body during processing and manufacturing, and reduce the manufacturing difficulty of the battery cell.

According to some embodiments of the present application, along the circumferential direction of the opening, a spacing between any two adjacent first thickened regions is greater than or equal to 2 mm, and the spacing between any two adjacent first thickened regions is less than or equal to 15 mm.

In the above solution, the spacing between two adjacent first thickened regions satisfies the above relationship. On one hand, when the spacing between any two adjacent first thickened regions is less than or equal to 15 mm, the plurality of first thickened regions can occupy a larger dimension in the circumferential direction of the opening, which can improve the strength of the first opening portion. On the other hand, when the spacing between any two adjacent first thickened regions is greater than or equal to 2 mm, the difficulty of demolding the housing body during processing and manufacturing can be reduced, facilitating demolding.

According to some embodiments of the present application, along a second direction, a dimension of the first thickened region is greater than or equal to 0.1 times a dimension of the first wall, and the dimension of the first thickened region is less than or equal to 0.5 times the dimension of the first wall, where the second direction, the first direction, and a thickness direction of the first wall are perpendicular to each other.

In the above solution, the dimension of the first thickened region in the second direction satisfies the above relationship. On one hand, when the dimension of the first thickened region is greater than or equal to 0.1 times the dimension of the first wall, the strength of the first opening portion can be improved. On the other hand, when the dimension of the first thickened region is less than or equal to 0.5 times the dimension of the first wall, the difficulty of demolding the housing body during processing and manufacturing can be reduced.

According to some embodiments of the present application, a thickness direction of the first thickened region is parallel to the thickness direction of the first wall, a difference between the maximum thickness of the first thickened region and the thickness of the first body portion is greater than or equal to 0.05 mm, and the difference between the maximum thickness of the first thickened region and the thickness of the first body portion is less than or equal to the thickness of the first body portion.

In the above solution, the difference between the maximum thickness of the first thickened region and the thickness of the first body portion satisfies the above relationship. On one hand, when the difference between the maximum thickness of the first thickened region and the thickness of the first body portion is greater than or equal to 0.05 mm, the first thickened region has higher strength. On the other hand, when the difference between the maximum thickness of the first thickened region and the thickness of the first body portion is less than or equal to the thickness of the first body portion, the space occupied by the first thickened region is smaller, so that the battery cell may have a higher energy density.

According to some embodiments of the present application, the maximum thickness of the first thickened region is greater than or equal to 0.25 mm, and the maximum thickness of the first thickened region is less than or equal to 2.4 mm.

In the above solution, the thickness of the first thickened region satisfies the above relationship. On one hand, when the maximum thickness of the first thickened region is greater than or equal to 0.25 mm, the first thickened region has higher strength. On the other hand, when the maximum thickness of the first thickened region is less than or equal to 2.4 mm, the space occupied by the first thickened region is smaller.

According to some embodiments of the present application, the thickness of the first body portion is greater than or equal to 0.2 mm, and the thickness of the first body portion is less than or equal to 1.2 mm.

In the above solution, on one hand, when the thickness of the first body portion is greater than or equal to 0.2 mm, the first body portion has higher strength. On the other hand, when the thickness of the first body portion is less than or equal to 1.2 mm, the space occupied by the first body portion in the thickness direction of the first wall is smaller, so that the battery cell may have a higher energy density.

According to some embodiments of the present application, the first body portion has a first surface facing the interior of the battery cell, and the first thickened region protrudes from the first surface.

In the above solution, the first thickened region protrudes from the first surface, so that a side of the first thickened region facing away from the interior of the battery cell may be parallel to a side of the first body portion facing away from the interior of the battery cell, reducing the space occupied by the first thickened region on an outer side of the battery cell and reducing the risk of interference between the first thickened region and other components.

According to some embodiments of the present application, the end cover is disposed in the opening, the end cover has a first side surface facing the first opening portion, the first side surface is provided with a first recessed region corresponding to the first thickened region, and at least a portion of the first thickened region is located in the first recessed region.

In the above solution, at least a portion of the first thickened region is located in the first recessed region, facilitating the fitting of the end cover with the first wall and facilitating the connection between the end cover and the housing body.

According to some embodiments of the present application, the end cover has a second surface facing away from the interior of the battery cell, and along the first direction, a maximum distance between an end of the first thickened region facing away from the second surface and the second surface is less than or equal to 10 mm.

In the above solution, along the first direction, the maximum distance between the end of the first thickened region facing away from the second surface and the second surface is less than or equal to 10 mm, which not only allows the first opening portion to have higher strength to reduce the risk of cracking in the region of the housing body near the welding position between the housing body and the end cover, but also facilitates demolding of the housing body during processing and manufacturing, facilitating processing and manufacturing.

According to some embodiments of the present application, the plurality of first thickened regions include a first central thickened region, where the first central thickened region extends along a second direction, and the first central thickened region passes through a center of the first wall in the second direction; and the second direction, the first direction, and the thickness direction of the first wall are perpendicular to each other.

In the above solution, the first central thickened region passes through the center of the first wall in the second direction, so that a region near the center of the first wall in the second direction has higher strength, facilitating reduction of the risk of cracking in the region of the housing body near the welding position between the housing body and the end cover.

According to some embodiments of the present application, the plurality of first thickened regions are symmetrically arranged with respect to the center of the first wall in the second direction; and the second direction, the first direction, and the thickness direction of the first wall are perpendicular to each other.

In the above solution, the arrangement manner of the plurality of first thickened regions allows the first opening portion to have higher strength, improving the welding strength between the first opening portion and the end cover.

According to some embodiments of the present application, the housing body further includes a second wall, where the second wall is connected to the first wall, the end cover is connected to the second wall, the second wall includes a second opening portion and a second body portion spaced apart along the first direction, the second opening portion is closer to the opening than the second body portion, and the end cover is welded to the second opening portion; and the second opening portion includes a plurality of second thickened regions and at least one second transition region, where the plurality of second thickened regions are spaced apart along the circumferential direction of the opening, two adjacent second thickened regions are connected to each other through the second transition region, a maximum thickness of the second thickened region is greater than a thickness of the second body portion, and the maximum thickness of the second thickened region is greater than a thickness of the second transition region.

In the above solution, the second wall is adjacent to the first wall. The structure of the second wall is similar to that of the first wall. The arrangement of the second thickened regions can enhance the strength of the second opening portion, enhance the strength of the second wall, and further reduce the risk of cracking in the region of the housing body near the welding position between the housing body and the end cover. In addition, the plurality of second thickened regions are spaced apart along the circumferential direction of the opening, which can reduce the difficulty of demolding the housing body during processing and manufacturing, and reduce the manufacturing difficulty of the battery cell.

According to some embodiments of the present application, an area of an outer surface of the second wall is smaller than an area of an outer surface of the first wall.

In the above solution, the area of the outer surface of the second wall is smaller than the area of the outer surface of the first wall. The first wall may be a large face of the housing body. The arrangement of the first thickened regions and the second thickened regions can reduce the risk of cracking in the region of the housing body near the welding position between the housing body and the end cover.

According to some embodiments of the present application, the second body portion has a third surface facing the interior of the battery cell, and the second thickened region protrudes from the third surface.

In the above solution, the second thickened region protrudes from the third surface, so that a side of the second thickened region facing away from the interior of the battery cell may be parallel to a side of the second body portion facing away from the interior of the battery cell, reducing the space occupied by the second thickened region on the outer side of the battery cell and reducing the risk of interference between the second thickened region and other components.

According to some embodiments of the present application, the end cover is disposed in the opening, the end cover has a second side surface facing the second opening portion, the second side surface is provided with a second recessed region corresponding to the second thickened region, and at least a portion of the second thickened region is located in the second recessed region.

In the above solution, the arrangement of the second recessed region can facilitate the fitting of the end cover with the second wall and facilitate the connection between the end cover and the housing body.

According to some embodiments of the present application, the thickness of the first transition region is equal to the thickness of the first body portion.

In the above solution, the thickness of the first transition region is equal to the thickness of the first body portion, facilitating processing and manufacturing.

According to some embodiments of the present application, two first walls are provided, where the two first walls are disposed opposite each other in a third direction, and the third direction is parallel to the thickness direction of the first wall; and the housing body further includes a bottom wall and two second walls disposed opposite each other in the second direction, the two first walls and the two second walls enclose the opening, and along the first direction, the bottom wall is opposite the opening; where the first direction, the second direction, and the third direction are perpendicular to each other.

In the above solution, the bottom wall is opposite the opening. During assembly of the battery cell, the bottom wall can support an electrode assembly, facilitating positioning of the electrode assembly.

According to some embodiments of the present application, the housing body is a prismatic structure, the housing body has two openings, two end covers are provided, and the two end covers seal the two openings respectively.

In the above solution, the housing body has two openings, and the two end covers seal the two openings respectively, facilitating assembly of the electrode assembly with the housing body.

According to a second aspect, embodiments of the present application further provide a battery including the battery cell according to any one of the above embodiments.

According to some embodiments of the present application, a plurality of battery cells are provided, where the plurality of battery cells are stacked along a third direction to form a battery cell group, and the third direction is parallel to the thickness direction of the first wall; and the battery further includes an end plate, where along the third direction, the end plate is disposed at an end of the battery cell group, and along a direction from the first body portion to the first opening portion, at least a portion of the first opening portion exceeds the end plate.

In the above solution, the end plate is disposed at the end of the battery cell group in the third direction, and the end plate has a larger connection area with a housing body of a battery cell adjacent thereto, forming a constraint on the housing body and reducing the risk of cracking in a region of the housing body near a welding position between the housing body and the end cover.

According to a third aspect, embodiments of the present application further provide an electric device including the battery cell or the battery according to any one of the above embodiments, where the battery cell or the battery is configured to provide electrical energy.

According to a fourth aspect, embodiments of the present application further provide an energy storage apparatus including the battery cell or the battery according to any one of the above embodiments.

The above description is only an overview of the technical solutions of the present application. In order to more clearly understand the technical means of the present application, it can be implemented in accordance with the contents of the specification, and in order to make the above and other objects, features, and advantages of the present application more obvious and understandable, specific embodiments of the present application are listed below.

### BRIEF DESCRIPTION OF DRAWINGS

To more clearly illustrate the technical solutions of the embodiments of the present application, the drawings required in the embodiments will be briefly introduced below. It should be understood that the following drawings only show some embodiments of the present application and therefore should not be considered as limitations on the scope. For those of ordinary skill in the art, other related drawings can be obtained based on these drawings without creative efforts.
FIG. 1 is a schematic structural diagram of a vehicle provided by some embodiments of the present application;
FIG. 2 is a schematic exploded view of a battery provided by some embodiments of the present application;
FIG. 3 is a schematic exploded view of a battery cell provided by some embodiments of the present application;
FIG. 4 is a schematic structural exploded view of a housing provided by some embodiments of the present application;
FIG. 5 is a top view of a housing body provided by some embodiments of the present application;
FIG. 6 is a cross-sectional view along direction A-A of FIG. 5;
FIG. 7 is a partially enlarged view at position B of FIG. 6;
FIG. 8 is a cross-sectional view along direction C-C of FIG. 5;
FIG. 9 is a partially enlarged view at position D of FIG. 8;
FIG. 10 is a schematic assembly diagram of an end cover and a first opening portion provided by some embodiments of the present application;
FIG. 11 is a schematic structural diagram of an end cover provided by some embodiments of the present application;
FIG. 12 is a partially enlarged view at position E of FIG. 11;
FIG. 13 is a schematic structural diagram of a housing body provided by some other embodiments of the present application;
FIG. 14 is a schematic assembly diagram of an end cover and a second opening portion provided by some embodiments of the present application;
FIG. 15 is a schematic structural diagram of an end cover provided by some other embodiments of the present application;
FIG. 16 is a partially enlarged view at position F of FIG. 15;
FIG. 17 is a schematic assembly diagram of an end plate and a plurality of battery cells provided by some embodiments of the present application;
FIG. 18 is a schematic assembly diagram of an end plate and a battery cell provided by some embodiments of the present application; and
FIG. 19 is a partially enlarged view at position G of FIG. 18.

In the drawings, the drawings are not drawn to actual scale.

Description of reference signs: 100. battery; 10. box; 11. first sub-box; 12. second sub-box; 20. battery cell; 20a. battery cell group; 21. housing; 210. first welding region; 211. housing body; 211a. opening; 212. end cover; 212a. first side surface; 212b. first recessed region; 212c. second side surface; 212d. second recessed region; 212e. second surface; 22. electrode assembly; 23. electrode terminal; 24. first wall; 241. first opening portion; 241a. first thickened region; 241b. first transition region; 241c. first central thickened region; 242. first body portion; 242a. first surface; 25. second wall; 251. second opening portion; 251a. second thickened region; 251b. second transition region; 252. second body portion; 252a. third surface; 26. bottom wall; 30. end plate; 200. controller; 300. motor; 1000. vehicle; X. thickness direction of the first wall; Y. second direction; and Z. first direction.

### DESCRIPTION OF EMBODIMENTS

The embodiments of the present application will be further described in detail below in conjunction with the drawings and the embodiments. The following detailed description of the embodiments and the drawings are intended to illustrate the principle of the present application, rather than to limit the scope of the present application, meaning that the present application is not limited to the embodiments described herein.

Unless otherwise defined, all technical and scientific terms used in the present application shall have the same meanings as commonly understood by those skilled in the art to which the present application relates. The terms used in the specification of the present application are intended to merely describe the specific embodiments rather than to limit the present application. The terms "include", "comprise", "have", and any variations thereof in the specification and claims of the present application as well as the foregoing description of drawings are intended to cover non-exclusive inclusions. The terms "first", "second", and the like in the specification and claims of the present application or the above drawings are used to distinguish different objects, rather than to describe a specific order or primary-secondary relationship.

Reference to "embodiment" in the present application means that a specific feature, structure, or characteristic described in conjunction with the embodiment may be included in at least one embodiment of the present application. The appearance of the phrase in various places in the specification does not necessarily refer to the same embodiment, nor is it an independent or alternative embodiment mutually exclusive with other embodiments. Those skilled in the art explicitly and implicitly understand that the embodiments described in the present application can be combined with other embodiments.

In the description of the present application, it should be noted that, unless otherwise explicitly specified and limited, the terms "mounting", "connection", "join", and "fastening" should be understood in their general senses. For example, they may refer to a fixed connection, a detachable connection, or an integral connection, and may refer to a direct connection, an indirect connection via an intermediate medium, an internal communication between two elements. For those of ordinary skill in the art, the specific meanings of the above terms in the present application can be understood according to specific situations.

The term "and/or" in the present application is only an associative relationship for describing associated objects, indicating that three relationships may be present. For example, A and/or B may indicate the following three cases: presence of only A, presence of both A and B, and presence of only B. In addition, the character "/" in the present application generally indicates an "or" relationship between contextually associated objects.

"A plurality of" appearing in the present application means more than two (inclusive). Similarly, "a plurality of groups" means more than two (inclusive) groups, and "a plurality of pieces" means more than two (inclusive) pieces.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or the battery module is accommodated in the box.

In some embodiments, the box may be a portion of a chassis structure of a vehicle. For example, a portion of the box may become at least a portion of a floor of the vehicle, or a portion of the box may become at least a portion of a cross beam and longitudinal beam of the vehicle.

In some embodiments, the battery may be an energy storage apparatus. The energy storage apparatus includes an energy storage container, an energy storage electric cabinet, and the like.

In the embodiments of the present application, the battery cell may be a secondary battery. The secondary battery refers to a battery cell that can continue to be used by activating active materials through charging after discharge.

The battery cell may be but is not limited to a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like.

The battery cell typically includes an electrode assembly. The electrode assembly includes a positive electrode, a negative electrode, and a separator. During charging and discharging of the battery cell, active ions (for example, lithium ions) intercalate and deintercalate back and forth between the positive electrode and the negative electrode. The separator is disposed between the positive electrode and the negative electrode, can prevent short circuit between the positive electrode and the negative electrode, and can allow active ions to pass through.

In some embodiments, the positive electrode may be a positive electrode plate. The positive electrode plate may include a positive electrode current collector and a positive electrode active material disposed on at least one surface of the positive electrode current collector.

As an example, the positive electrode current collector has two surfaces opposite in its own thickness direction, and the positive electrode active material is disposed on either or both of the two opposite surfaces of the positive electrode current collector.

As an example, the positive electrode current collector may use a metal foil or a composite current collector. For example, as a metal foil, aluminum with silver-plated surface, stainless steel with silver-plated surface, stainless steel, copper, aluminum, nickel, carbon electrode, carbon, nickel, or titanium can be used. The composite current collector may include a polymer substrate and a metal layer. The composite current collector can be formed by forming a metal material (aluminum, aluminum alloy, nickel, nickel alloy, titanium, titanium alloy, silver, and silver alloy, or the like) on a polymer substrate (such as a substrate of polypropylene, polyethylene terephthalate, polybutylene terephthalate, polystyrene, polyethylene, or the like).

As an example, the positive electrode active material may include at least one of the following materials: lithium-containing phosphate, lithium transition metal oxide, and their respective modified compounds. However, the present application is not limited to these materials, and other conventional materials that can be used as battery positive electrode active materials may also be used.

In some embodiments, the negative electrode may be a negative electrode plate, and the negative electrode plate may include a negative electrode current collector.

As an example, the negative electrode current collector may use a metal foil or a composite current collector. For example, as a metal foil, aluminum with silver-plated surface, stainless steel with silver-plated surface, stainless steel, copper, aluminum, nickel, carbon electrode, carbon, nickel, or titanium can be used.

In some embodiments, the negative electrode current collector has two surfaces opposite in its own thickness direction, and the negative electrode active material is disposed on either or both of the two opposite surfaces of the negative electrode current collector.

As an example, the negative electrode active material may use negative electrode active materials known in the art for batteries. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as battery negative electrode active materials may also be used. These negative electrode active materials may be used alone or in combination of two or more.

In some embodiments, the separator is a separator film. The present application has no particular restriction on the type of the separator film, and any well-known porous separator film with good chemical stability and mechanical stability can be selected.

As an example, the main material of the separator film may be selected from at least one of glass fiber, nonwoven fabric, polyethylene, polypropylene, polyvinylidene fluoride, and ceramics. The separator film may be a single-layer film or a multi-layer composite film, without particular restriction. When the separator film is a multi-layer composite film, the materials of layers may be the same or different, without particular restriction. The separator may be a separate component located between the positive electrode and the negative electrode, or may be attached to the surface of the positive electrode or the negative electrode.

In some embodiments, the separator is a solid-state electrolyte. The solid-state electrolyte is disposed between the positive electrode and the negative electrode, and simultaneously serves to transmit ions and separate the positive electrode and the negative electrode.

In some embodiments, the electrode assembly is a wound structure. The positive electrode plate and the negative electrode plate are wound into a wound structure.

In some embodiments, the electrode assembly is a stacked structure.

In some embodiments, the battery cell may include a housing. The housing is configured to encapsulate components such as the electrode assembly and an electrolyte. The housing may be a steel shell, an aluminum shell, a composite metal shell (such as a copper-aluminum composite shell), or the like.

In some embodiments, the housing includes an end cover and a housing body. The housing body is provided with an opening. The end cover seals the opening to form a sealed space for accommodating the electrode assembly, the electrolyte, and other substances. The housing body may be provided with one or more openings. One or more end covers may also be provided.

In some embodiments, at least one electrode terminal is provided on the housing. The electrode terminal is electrically connected to a tab of the electrode assembly. The electrode terminal may be directly connected to the tab or indirectly connected to the tab through an adapter. The electrode terminal may be provided on the end cover or on the housing body.

In some embodiments, an explosion-proof valve is provided on the housing. The explosion-proof valve is used to release the internal pressure of the battery cell.

As an example, the battery cell may be a prismatic battery cell, a pouch battery cell, or a battery cell of other shapes. The prismatic battery cell includes a square shell battery cell, a blade-shaped battery cell, and a polyhedral battery. The polyhedral battery is, for example, a hexahedral battery. The embodiments of the present application have no particular restriction.

For the development of battery technology, multiple design factors such as energy density, discharge capacity, charge-discharge rate, and other performance parameters need to be considered simultaneously, and additionally, the reliability of the battery needs to be considered.

In some embodiments, the battery cell includes a housing and an electrode assembly. The electrode assembly is disposed in the housing. The housing includes a housing body and an end cover. The housing body has an opening. The end cover seals the opening. The end cover is typically welded to the housing body. The high temperature during welding of the end cover and the housing body easily causes portions of the end cover and the housing body near a welding position to form a heat-affected region, where the strength of the portions of the end cover and the housing body in the heat-affected region is lower. During charging and discharging of the battery cell, or when the electrode assembly produces a large amount of gas, or when the battery cell undergoes thermal runaway, cracking easily occurs in a region of the housing body near the welding position between the housing body and the end cover, leading to damage to the housing body and reducing the service life and reliability of the battery cell.

In view of this, embodiments of the present application provide a technical solution where a battery cell includes a housing. The housing includes a housing body and an end cover. The housing body includes a first wall. The first wall includes an opening portion and a first body portion sequentially arranged along a first direction. The first direction is parallel to a thickness direction of the end cover. The first opening portion is closer to the opening than the first body portion. The end cover is welded to the first opening portion to seal the opening. The first opening portion includes a plurality of first thickened regions and at least one first transition region. The plurality of first thickened regions and at least one first transition region are alternately arranged along a circumferential direction of the opening. A maximum thickness of the first thickened region is greater than a thickness of the first body portion, and the maximum thickness of the first thickened region is greater than a thickness of the first transition region. This can improve the strength of the first opening portion and reduce the risk of cracking in a region of the housing body near a welding position between the housing body and the end cover, so that the battery cell has higher reliability.

In such a battery cell, the maximum thickness of the first thickened region is greater than the thickness of the first body portion. The thickening treatment of the first thickened region allows the first thickened region to have higher strength and can enhance the strength of the first opening portion. The end cover is connected to the first opening portion, which can reduce the risk of cracking in the region of the housing body near the welding position between the housing body and the end cover, improving the reliability of the battery cell. In addition, the plurality of first thickened regions are spaced apart along the circumferential direction of the opening, which can reduce the difficulty of demolding the housing body during processing and manufacturing, and reduce the manufacturing difficulty of the battery cell.

The battery disclosed in the embodiments of the present application may be used in, but is not limited to, electric devices such as vehicles, ships, or aircraft. A power supply system of the electric device may be formed by using the battery disclosed in the present application.

The embodiments of the present application provide an electric device using a battery as a power source. The electric device may be but is not limited to a mobile phone, a tablet computer, a laptop computer, an electric toy, an electric tool, an electric bicycle, an electric motorcycle, an electric vehicle, a ship, an aircraft, or the like. The electric toy may include a fixed or mobile electric toy, such as a game console, an electric toy car, an electric toy ship, or an electric toy airplane toy. The aircraft may include an airplane, a rocket, a space shuttle, a spacecraft, and the like.

For convenience of description, the following embodiments are described by taking an example where an electric device according to an embodiment of the present application is a vehicle 1000.

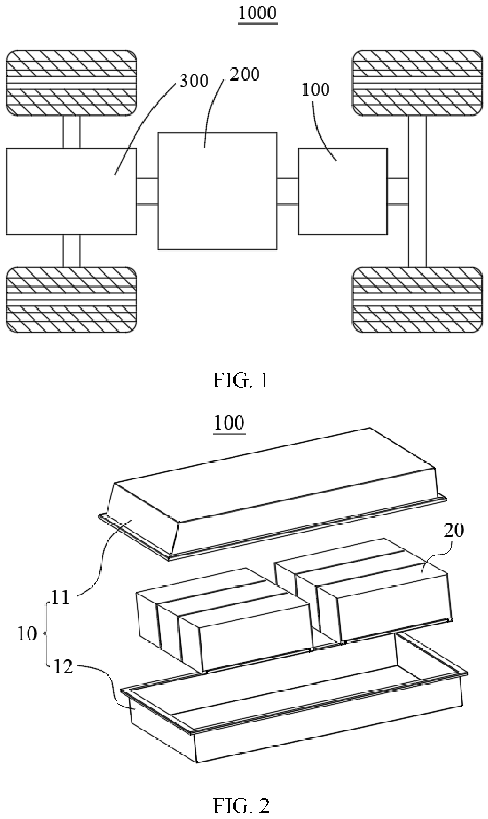

Referring to FIG. 1, FIG. 1 is a schematic structural diagram of a vehicle provided by some embodiments of the present application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. A battery 100 is provided inside the vehicle 1000. The battery 100 may be disposed at the bottom, head, or tail of the vehicle 1000. The battery 100 can be configured to supply power to the vehicle 1000. For example, the battery 100 can be used as an operating power source of the vehicle 1000 for a circuit system of the vehicle 1000, for example, to satisfy power needs of start, navigation, and driving of the vehicle 1000.

The vehicle 1000 may further include a controller 200 and a motor 300. The controller 200 is configured to control the battery 100 to supply power to the motor 300, for example, to satisfy power needs of start, navigation, and driving of the vehicle 1000.

In some embodiments of the present application, the battery 100 can not only serve as an operating power source of the vehicle 1000 but also serve as a driving power source of the vehicle 1000, replacing or partially replacing fuel or natural gas to provide driving power for the vehicle 1000.

Referring to FIG. 2, FIG. 2 is a schematic exploded view of a battery provided by some embodiments of the present application. The battery 100 includes a box 10 and a battery cell 20. The battery cell 20 is accommodated in the box 10. The box 10 is configured to provide an accommodation space for the battery cell 20. The box 10 may adopt various structures. In some embodiments, the box 10 may include a first sub-box 11 and a second sub-box 12. The first sub-box 11 and the second sub-box 12 fit each other, so that the first sub-box 11 and the second sub-box 12 jointly define the accommodation space for accommodating the battery cell 20. The second sub-box 12 may be a hollow structure with an opening at one end. The first sub-box 11 may be a plate-shaped structure. The first sub-box 11 covers the opening side of the second sub-box 12, so that the first sub-box 11 and the second sub-box 12 jointly define the accommodation space. The first sub-box 11 and the second sub-box 12 may alternatively each be a hollow structure with an opening at one side. The opening side of the first sub-box 11is engaged with the opening side of the second sub-box 12.

In the battery 100, a plurality of battery cells 20 may be provided. The plurality of battery cells 20 may be connected in series, parallel, or series-parallel, where being connected in series-parallel means a combination of series and parallel connections of the plurality of battery cells 20. The plurality of battery cells 20 may be directly connected in series, parallel or series-parallel, and then an entirety of the plurality of battery cells 20 is accommodated in the box 10; or certainly, the battery 100 may be formed by a plurality of battery cells 20 being connected in series, parallel or series-parallel first to form a battery module and then a plurality of battery modules being connected in series, parallel or series-parallel to form an entirety which is accommodated in the box 10. The battery 100 may further include other structures. For example, the battery 100 may further include a busbar component for achieving electrical connection between the plurality of battery cells 20.

The battery cell 20 may be a secondary battery or a primary battery. The battery cell 20 may alternatively be a lithium-sulfur battery, a sodium-ion battery, or a magnesium-ion battery, but is not limited thereto.

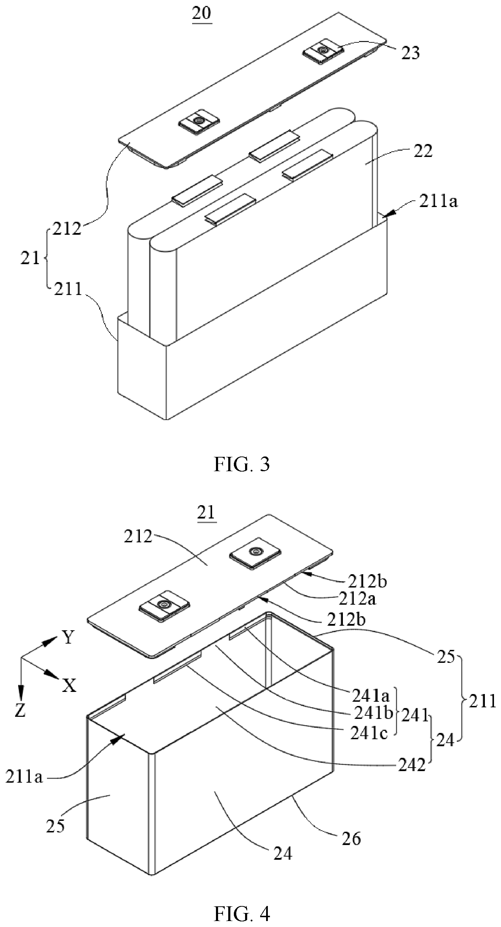

Referring to FIG. 3, FIG. 3 is a schematic exploded view of a battery cell provided by some embodiments of the present application. As shown in FIG. 3, the battery cell 20 includes a housing 21, an electrode assembly 22, and other functional components. The housing 21 includes a housing body 211 and an end cover 212. The housing body 211 has an opening. The end cover 212 seals the opening to isolate the internal environment of the battery cell 20 from the external environment.

The housing body 211 is a component configured to fit with the end cover 212 to form the internal environment of the battery cell 20, where the formed internal environment can be used to accommodate the electrode assembly 22, the electrolyte, and other components. The housing body 211 and the end cover 212 may be independent components. The housing body 211 may have various shapes and dimensions. Specifically, the shape of the housing body 211 can be determined according to the specific shape and dimension of the electrode assembly 22. The material of the housing body 211 may be various, such as copper, iron, aluminum, stainless steel, or aluminum alloy.

The end cover 212 refers to a component that covers the opening of the housing body 211 to isolate the internal environment of the battery cell 20 from the external environment. Without limitation, the shape of the end cover 212 may be adapted to the shape of the housing body 211 to fit the housing body 211. Optionally, the end cover 212 may be made of a material with certain hardness and strength (such as aluminum alloy), so that the end cover 212 is less prone to deformation when subjected to extrusion and collision, allowing the battery cell 20 to have higher structural strength and improved reliability. Functional components such as an electrode terminal 23 can be provided on the end cover 212. The electrode terminal 23 may be configured to be electrically connected to the electrode assembly 22 for outputting or inputting electrical energy of the battery cell 20. The material of the end cover 212 may be various, such as copper, iron, aluminum, stainless steel, or aluminum alloy, which is not particularly limited in the embodiments of the present application. In some embodiments, an insulating structure may also be provided on an inner side of the end cover 212. The insulating structure can be used to isolate electrical connection components in the housing body 211 from the end cover 212 to reduce the risk of short circuit. Exemplarily, the insulating structure may be plastic, rubber, or the like.

The electrode assembly 22 is a component in the battery cell 20 where electrochemical reactions occur. One or more electrode assemblies 22 may be included in the housing body 211. The electrode assembly 22 is mainly formed by winding or stacking a positive electrode plate and a negative electrode plate. A separator film is typically provided between the positive electrode plate and the negative electrode plate. The separator film is used to separate the positive electrode plate and the negative electrode plate to avoid internal short circuit between the positive electrode plate and the negative electrode plate. Portions of the positive electrode plate and the negative electrode plate with active materials constitute a main body portion of the electrode assembly. Portions of the positive electrode plate and the negative electrode plate without active materials each constitute a tab. A positive electrode tab and a negative electrode tab can be located together at one end of the main body portion or respectively located at two ends of the main body portion.

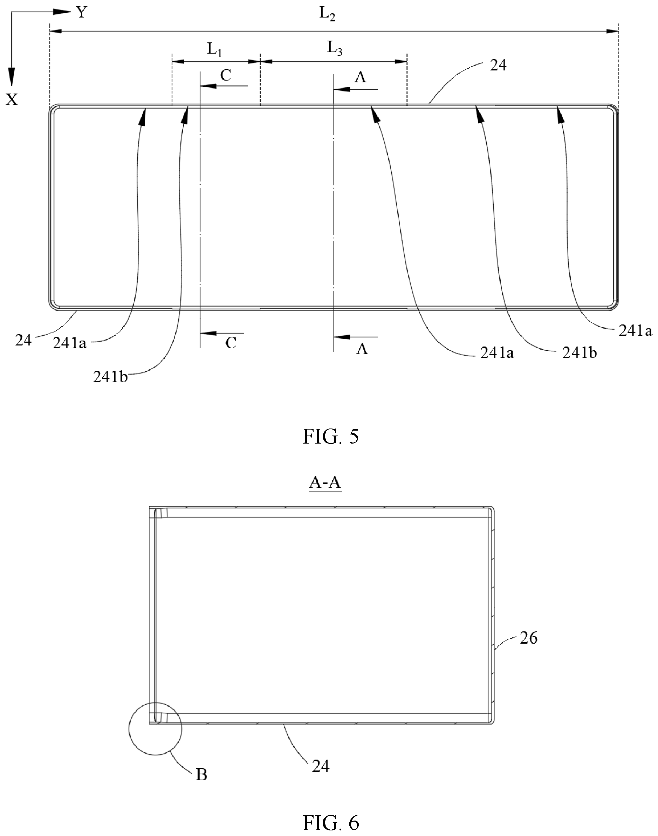

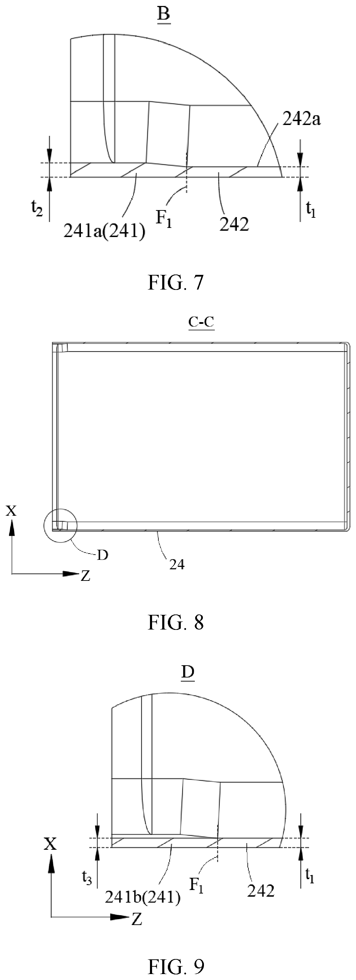

Referring to FIG. 3 and further referring to FIGs. 4 to 9, FIG. 4 is a schematic structural exploded view of a housing provided by some embodiments of the present application; FIG. 5 is a top view of a housing body provided by some embodiments of the present application; FIG. 6 is a cross-sectional view along direction A-A of FIG. 5; FIG. 7 is a partially enlarged view at position B of FIG. 6; FIG. 8 is a cross-sectional view along direction C-C of FIG. 5; and FIG. 9 is a partially enlarged view at position D of FIG. 8. According to some embodiments of the present application, embodiments of the present application provide a battery cell 20. The battery cell 20 includes a housing 21. The housing 21 includes a housing body 211 and an end cover 212. The housing body 211 has an opening 211a. The housing body 211 includes a first wall 24. The first wall 24 includes a first opening portion 241 and a first body portion 242 sequentially arranged along a first direction Z. The first direction Z is parallel to a thickness direction of the end cover 212. The first opening portion 241 is closer to the opening 211a than the first body portion 242. The end cover 212 is welded to the first opening portion 241 to seal the opening 211a. The first opening portion 241 includes a plurality of first thickened regions 241a and at least one first transition region 241b. The plurality of first thickened regions 241a are spaced apart along a circumferential direction of the opening 211a. Two adjacent first thickened regions 241a are connected to each other through the first transition region 241b. A maximum thickness of the first thickened region 241a is greater than a thickness of the first body portion 242. The maximum thickness of the first thickened region 241a is greater than a thickness of the first transition region 241b.

In the figure, a direction indicated by letter Z is the first direction. The first direction Z is parallel to the thickness direction of the end cover 212. The first direction Z may be parallel to a height direction of the battery cell 20. A direction indicated by letter X may be a thickness direction of the first wall 24. A thickness direction of the first thickened region 241a and a thickness direction of the first transition region 241b are both parallel to the thickness direction X of the first wall. The thickness direction X of the first wall is perpendicular to the first direction Z. The thickness direction X of the first wall may be parallel to a width direction of the battery cell 20, or the thickness direction X of the first wall may be parallel to a length direction of the battery cell 20.

To facilitate distinguishing of the first opening portion 241 and the first body portion 242, the dashed line F₁ in FIGs. 7 and 9 is a boundary between the first opening portion 241 and the first body portion 242.

In some embodiments, the battery cell 20 further includes an electrode assembly 22, and the electrode assembly 22 is located in the housing body 211.

Along the first direction Z, the first body portion 242 is farther from the opening 211a than the first opening portion 241. The first opening portion 241 can enclose the opening 211a to facilitate sealing of the opening 211a after welding the end cover 212 to the first opening portion 241.

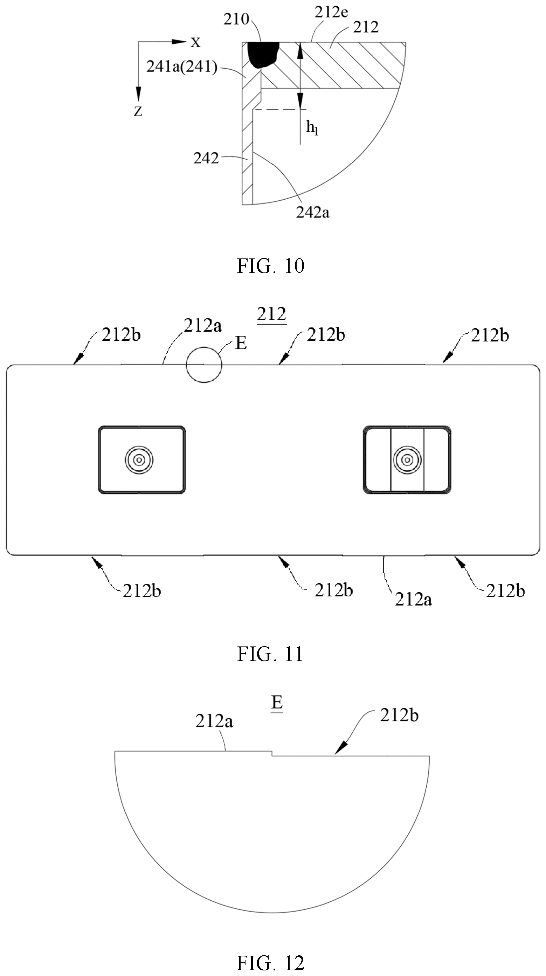

Referring to FIG. 10, FIG. 10 is a schematic assembly diagram of an end cover and a first opening portion provided by some embodiments of the present application. In some embodiments, the end cover 212 is welded to a portion of the first opening portion 241 to form a first welding region 210, where the first welding region 210 may be referred to as a weld mark.

In some embodiments, the first body portion 242 may be a structure with a uniform thickness. A thickness at any position of the first body portion 242 may be a maximum thickness of the first body portion 242.

In some embodiments, the first thickened region 241a may be a structure with a uniform thickness or a structure with a variable thickness. When the first thickened region 241a is a structure with a uniform thickness, the maximum thickness of the first thickened region 241a is a thickness at any position of the first thickened region 241a. When the first thickened region 241a is a structure with a variable thickness, the maximum thickness of the first thickened region 241a is a thickness at a position with the maximum thickness of the first thickened region 241a.

Optionally, when the first thickened region 241a is a structure with a variable thickness, the thickness of the first thickened region 241a may gradually decrease from an end away from the first body portion 242 to an end close to the first body portion 242. A region with the maximum thickness of the first thickened region 241a is located at the end away from the first body portion 242.

In some embodiments, the first transition region 241b may be a structure with a uniform thickness or a structure with a variable thickness. Optionally, the first transition region 241b is a structure with a uniform thickness, and the thickness of the first transition region 241b is a thickness at any position of the first transition region 241b.

The plurality of first thickened regions 241a are spaced apart in the circumferential direction of the opening 211a, so that the plurality of first thickened regions 241a and at least one first transition region 241b may be alternately arranged along the circumferential direction of the opening 211a. The number of the first thickened regions 241a may be greater than the number of the first transition regions 241b, or the number of the first thickened regions 241a may be equal to the number of the first transition regions 241b. For example, when the number of the first thickened regions 241a is three and the number of the first transition regions 241b is two, along the circumferential direction of the opening 211a, the first thickened region 241a, the first transition region 241b, the first thickened region 241a, the first transition region 241b, and the first thickened region 241a are sequentially distributed.

In the battery cell 20 according to the embodiments of the present application, the plurality of first thickened regions 241a are spaced apart along the circumferential direction of the opening 211a, the maximum thickness of the first thickened region 241a is greater than the thickness of the first body portion 242, and the first thickened region 241a is a thickened region of the first opening portion 241. This can improve the strength of the first opening portion 241, improve the strength of the first wall 24, reduce the risk of cracking in a region of the housing body 211 near a welding position between the housing body 211 and the end cover 212, and improve the reliability of the battery cell 20. In addition, the plurality of first thickened regions 241a are spaced apart along the circumferential direction of the opening 211a, which can reduce the difficulty of demolding the housing body 211 during processing and manufacturing, and reduce the manufacturing difficulty of the battery cell 20.

In some embodiments, dimensions of the plurality of first thickened regions 241a may be equal or unequal. The dimension of the first thickened region 241a may include the thickness, length, width, and the like of the first thickened region 241a.

In some embodiments, the dimensions of the plurality of first transition regions 241b may be equal or unequal. The dimension of the first transition region 241b may include the thickness, length, width, and the like of the first transition region 241b.

Referring to FIG. 5, according to some embodiments of the present application, along the circumferential direction of the opening 211a, a spacing between any two adjacent first thickened regions 241a is greater than or equal to 2 mm, and the spacing between any two adjacent first thickened regions 241a is less than or equal to 15 mm.

The spacing between any two adjacent first thickened regions 241a is L₁, that is, 2 mm ≤ L₁ ≤ 15 mm.

Optionally, L₁ may be but is not limited to 2 mm, 3 mm, 4 mm, 5 mm, 6 mm, 7 mm, 8 mm, 9 mm, 10 mm, 11 mm, 12 mm, 13 mm, 14 mm, 15 mm, or the like.

In the above solution, the spacing between two adjacent first thickened regions 241a satisfies the above relationship. On one hand, when L₁ ≤ 15 mm, the plurality of first thickened regions 241a can occupy a larger dimension in the circumferential direction of the opening 211a, which can improve the strength of the first opening portion 241. On the other hand, when L₁ ≥ 2 mm, the difficulty of demolding the housing body 211 during processing and manufacturing can be reduced, facilitating demolding.

According to some embodiments of the present application, 5 mm ≤ L₁ ≤ 10 mm.

Optionally, L₁ may be but is not limited to 5 mm, 5.5 mm, 6 mm, 6.5 mm, 7 mm, 7.5 mm, 8 mm, 8.5 mm, 9 mm, 9.5 mm, 10 mm, or the like.

In the above solution, compared to L₁ < 5 mm, when L₁ ≥ 5 mm, the difficulty of demolding the housing body 211 during processing and manufacturing is further reduced. Compared to L₁ > 10 mm, when L₁ ≤ 10 mm, the first opening portion 241 has higher strength, reducing the risk of cracking in the region of the housing body 211 near the welding position between the housing body 211 and the end cover 212.

Referring to FIG. 5, according to some embodiments of the present application, along a second direction Y, a dimension of the first thickened region 241a is greater than or equal to 0.1 times a dimension of the first wall 24, and the dimension of the first thickened region 241a is less than or equal to 0.5 times the dimension of the first wall 24, where the second direction Y, the first direction Z, and the thickness direction X of the first wall are perpendicular to each other.

Along the second direction Y, the dimension of the first wall 24 is L₂, and the dimension of the first thickened region 241a is L₃, satisfying 0.1 * L₂ ≤ L₃ < 0.5 * L₂.

In the figure, a direction indicated by letter Y may be the second direction. The second direction Y may be parallel to the length direction of the battery cell 20, or the second direction Y may be parallel to the width direction of the battery cell 20. The second direction Y is a portion of the circumferential direction of the opening 211a.

0.1 * L₂ refers to 0.1 times the dimension of the first wall 24 in the second direction Y. 0.5 * L₂ refers to 0.5 times the dimension of the first wall 24 in the second direction Y.

Optionally, L₃ may be but is not limited to 0.1 * L₂, 0.15 * L₂, 0.2 * L₂, 0.25 * L₂, 0.3 * L₂, 0.35 * L₂, 0.4 * L₂, 0.45 * L₂, or the like.

In the above solution, the dimension of the first thickened region 241a in the second direction Y satisfies the above relationship. Thus, on one hand, this can improve the strength of the first opening portion 241; and on the other hand, this can reduce the difficulty of demolding the housing body 211 during processing and manufacturing.

In some embodiments, the dimensions of the plurality of first thickened regions 241a in the second direction Y may be equal or unequal. When the dimensions of the plurality of first thickened regions 241a in the second direction Y are equal, processing and manufacturing are facilitated. When the dimensions of the first thickened region 241a in the second direction Y are unequal, local thickening requirements can be met, and the difficulty of demolding the housing body can be reduced.

According to some embodiments of the present application, 0.2 * L₂ ≤ L₃ ≤ 0.25 * L₂.

Optionally, L₃ may be but is not limited to 0.2 * L₂, 0.21 * L₂, 0.22 * L₂, 0.23 * L₂, 0.24 * L₂, 0.25 * L₂, or the like.

In the above solution, compared to L₃ < 0.2 * L₂, when L₃ ≥ 0.2 * L₂, the first thickened region 241a has a larger length in the second direction Y, further enhancing the strength of the first opening portion 241. Compared to L₃ > 0.25 * L₂, when L₃ ≤ 0.25 * L₂, the difficulty of demolding the housing body 211 during processing and manufacturing is further reduced.

Referring to FIGs. 7 and 9, according to some embodiments of the present application, the thickness direction of the first thickened region 241a is parallel to the thickness direction X of the first wall. A difference between the maximum thickness of the first thickened region 241a and the thickness of the first body portion 242 is greater than or equal to 0.05 mm. The difference between the maximum thickness of the first thickened region 241a and the thickness of the first body portion 242 is less than or equal to the thickness of the first body portion 242.

The thickness of the first body portion 242 is t₁, and the maximum thickness of the first thickened region 241a is t₂, satisfying 0.05 mm ≤ t₂ - t₁ ≤ t₁.

In some embodiments, referring to FIG. 9, the thickness of the first transition region 241b may be t₃.

The above t₂ - t₁ refers to the difference between the maximum thickness of the first thickened region 241a and the thickness of the first body portion 242, which can be understood as a thickness value by which the first thickened region 241a is thickened relative to the first body portion 242, where t₁ > 0.05 mm.

In the above solution, the difference between the maximum thickness of the first thickened region 241a and the thickness of the first body portion 242 satisfies the above relationship. Thus, on one hand, this allows the first thickened region 241a to have higher strength; and on the other hand, the space occupied by the first thickened region 241a is smaller, so that the battery cell 20 may have a higher energy density.

According to some embodiments of the present application, 0.2 mm ≤ t₂ - t₁ ≤ 0.8 * t₁.

In the above solution, compared to t₂ - t₁ < 0.2 mm, when t₂ - t₁ ≥ 0.2 mm, the strength of the first thickened region 241a is further enhanced, so that the first opening portion 241 has higher strength. Compared to t₂ - t₁ > 0.8 * t₁, when t₂ - t₁ ≤ 0.8 * t₁, the space occupied by the first thickened region 241a is further reduced, reducing the impact on the energy density of the battery cell 20.

According to some embodiments of the present application, the maximum thickness of the first thickened region 241a is greater than or equal to 0.25 mm, and the maximum thickness of the first thickened region 241a is less than or equal to 2.4 mm.

Optionally, t₂ may be but is not limited to 0.25 mm, 0.3 mm, 0.35 mm, 0.4 mm, 0.45 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, or the like.

In the above solution, the thickness of the first thickened region 241a satisfies the above relationship. Thus, on one hand, this allows the first thickened region 241a to have higher strength; and on the other hand, this allows the space occupied by the first thickened region 241a to be smaller.

According to some embodiments of the present application, 0.8 mm ≤ t₂ ≤ 1.8 mm.

Optionally, t₂ may be but is not limited to 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, or the like.

In the above solution, compared to t₂ < 0.8 mm, when t₂ ≥ 0.8 mm, the first thickened region 241a is further allowed to have higher strength, so that the first opening portion 241 has higher strength. Compared to t₂ > 1.8 mm, when t₂ ≤ 1.8 mm, the space occupied by the first thickened region 241a is further smaller, reducing the impact on the energy density of the battery cell 20.

According to some embodiments of the present application, the thickness of the first body portion 242 is greater than or equal to 0.2 mm, and the thickness of the first body portion 242 is less than or equal to 1.2 mm.

Optionally, t₁ may be but is not limited to 0.2 mm, 0.3 mm, 0.4 mm, 0.5 mm, 0.6 mm, 0.7 mm, 0.8 mm, 0.9 mm, 1 mm, 1.1 mm, 1.2 mm, or the like.

In the above solution, the thickness of the first body portion 242 satisfies the above relationship. On one hand, when the thickness of the first body portion 242 is greater than or equal to 0.2 mm, the first body portion 242 has higher strength. On the other hand, when the thickness of the first body portion 242 is less than or equal to 1.2 mm, the space occupied by the first body portion 242 in the thickness direction X of the first wall is smaller, so that the battery cell 20 has higher energy density.

According to some embodiments of the present application, 0.6 mm ≤ t₁ ≤ 1 mm.

Optionally, t₁ may be but is not limited to 0.6 mm, 0.65 mm, 0.7 mm, 0.75 mm, 0.8 mm, 0.85 mm, 0.9 mm, 0.95 mm, 1 mm, or the like.

In the above solution, compared to t₁ < 0.6 mm, when t₁ ≥ 0.6 mm, the first body portion 242 is further allowed to have higher strength. Compared to t₁ > 1 mm, when t₁ ≤ 1 mm, the first body is further allowed to occupy a smaller space, so that the battery cell 20 has higher energy density.

Referring to FIGs. 7 and 10, according to some embodiments of the present application, the first body portion 242 has a first surface 242a facing the interior of the battery cell 20, and the first thickened region 241a protrudes from the first surface 242a.

In the above solution, the first thickened region 241a protrudes from the first surface 242a, so that a side of the first thickened region 241a facing away from the interior of the battery cell 20 may be parallel to a side of the first body portion 242 facing away from the interior of the battery cell 20, reducing the space occupied by the first thickened region 241a on an outer side of the battery cell 20 and reducing the risk of interference between the first thickened region 241a and other components.

Referring to FIG. 4 and further referring to FIGs. 11 and 12, FIG. 11 is a schematic structural diagram of an end cover provided by some embodiments of the present application; and FIG. 12 is a partially enlarged view at position E of FIG. 11. According to some embodiments of the present application, the end cover 212 is disposed in the opening 211a. The end cover 212 has a first side surface 212a facing the first opening portion 241. The first side surface 212a is provided with a first recessed region 212b corresponding to the first thickened region 241a. At least a portion of the first thickened region 241a is located in the first recessed region 212b.

The end cover 212 is disposed in the opening 211a, and a side surface of the end cover 212 is connected to an inner surface of the housing body 211 to facilitate welding of the end cover 212 to the housing body 211.

The first recessed region 212b refers to a region of the end cover 212 corresponding to the first thickened region 241a. The first recessed region 212b is a recess formed on the first side surface 212a. In the thickness direction X of the first wall, the first recessed region 212b is recessed in a direction facing away from the first wall 24 relative to other regions, so that at least a portion of the first thickened region 241a is located in the first recessed region 212b.

In the above solution, at least a portion of the first thickened region 241a is located in the first recessed region 212b, facilitating the fitting of the end cover 212 with the first wall 24 and facilitating the welding of the end cover 212 to the housing body 211.

Referring to FIG. 10, according to some embodiments of the present application, the end cover 212 has a second surface 212e facing away from the interior of the battery cell 20. Along the first direction Z, a maximum distance between an end of the first thickened region 241a facing away from the second surface 212e and the second surface 212e is less than or equal to 10 mm.

The maximum distance between the end of the first thickened region 241a facing away from the second surface 212e and the second surface 212e is h₁, satisfying h₁ ≤ 10 mm.

The maximum distance between the end of the first thickened region 241a facing away from the second surface 212e and the second surface 212e refers to a maximum distance between an end of the first thickened region 241a close to the first body portion 242 and the second surface 212e along the first direction Z.

In the above solution, along the first direction Z, the maximum distance between the end of the first thickened region 241a facing away from the second surface 212e and the second surface 212e is less than or equal to 10 mm, which not only allows the first opening portion 241 to have higher strength to reduce the risk of cracking in the region of the housing body 211 near the welding position between the housing body 211 and the end cover 212, but also facilitates demolding of the housing body 211 during processing and manufacturing, facilitating processing and manufacturing.

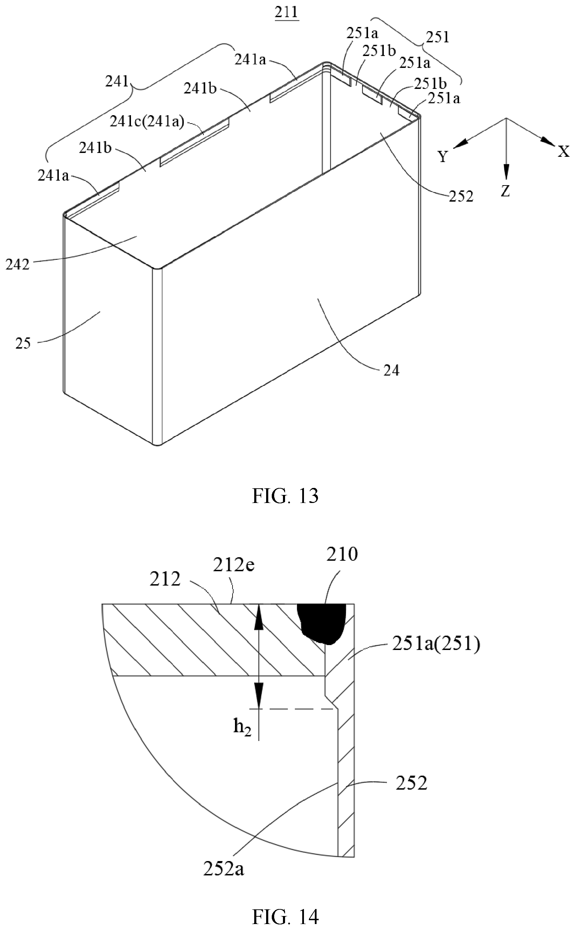

Referring to FIG. 4 and further referring to FIG. 13, FIG. 13 is a schematic structural diagram of a housing body provided by some other embodiments of the present application. According to some embodiments of the present application, the plurality of first thickened regions 241a include a first central thickened region 241c. The first central thickened region 241c extends along the second direction Y. The first central thickened region 241c passes through a center of the first wall 24 in the second direction Y. The second direction Y, the first direction Z, and the thickness direction X of the first wall are perpendicular to each other.

A center of the first central thickened region 241c in the second direction Y can coincide with the center of the first wall 24 in the second direction Y, or the center of the first central thickened region 241c in the second direction Y can not coincide with the center of the first wall 24 in the second direction Y.

Among the plurality of first thickened regions 241a, some first thickened regions 241a can be distributed at two ends of the first central thickened region 241c in the second direction Y, so that a plurality of positions of the first wall 24 in the second direction Y are all thickened, improving the strength of the first opening portion 241.

In the above solution, the first central thickened region 241c passes through the center of the first wall 24 in the second direction Y, so that a region near the center of the first wall 24 in the second direction Y has higher strength, facilitating reduction of the risk of cracking in the region of the housing body 211 near the welding position between the housing body 211 and the end cover 212.

According to some embodiments of the present application, the plurality of first thickened regions 241a are symmetrically arranged with respect to the center of the first wall 24 in the second direction Y. The second direction Y, the first direction Z, and the thickness direction X of the first wall are perpendicular to each other.

In some embodiments, one of the plurality of first thickened regions 241a can pass through the center of the first wall 24 in the second direction Y. For example, the plurality of first thickened regions 241a may include the first central thickened region 241c. The first central thickened region 241c can pass through the center of the first wall 24 in the second direction Y.

In some embodiments, one of the at least one first transition region 241b can pass through the center of the first wall 24 in the second direction Y.

In the above solution, the arrangement manner of the plurality of first thickened regions 241a allows the first opening portion 241 to have higher strength, improving the welding strength between the first opening portion 241 and the end cover 212.

Referring to FIG. 3 and further referring to FIG. 13, according to some embodiments of the present application, the housing body 211 further includes a second wall 25. The second wall 25 is connected to the first wall 24. The end cover 212 is connected to the second wall 25. The second wall 25 includes a second opening portion 251 and a second body portion 252 spaced apart along the first direction Z. The second opening portion 251 is closer to the opening 211a than the second body portion 252. The end cover 212 is welded to the second opening portion 251. The second opening portion 251 includes a plurality of second thickened regions 251a and at least one second transition region 251b. The plurality of second thickened regions 251a are spaced apart along the circumferential direction of the opening 211a. Two adjacent second thickened regions 251a are connected to each other through the second transition region 251b. A maximum thickness of the second thickened region 251a is greater than a thickness of the second body portion 252. The maximum thickness of the second thickened region 251a is greater than a thickness of the second transition region 251b.

A thickness direction of the second wall 25 may be parallel to the second direction Y.

The second wall 25 is adjacent to the first wall 24. Two second walls 25 may be provided. Two first walls 24 may be provided. The two second walls 25 are spaced apart along the second direction Y. The two first walls 24 are spaced apart along the thickness direction X of the first wall. Two ends of the second wall 25 are connected to the two first walls 24 respectively.

Along the first direction Z, the second body portion 252 is farther from the opening 211a than the second opening portion 251. The second opening portion 251 can enclose the opening 211a to facilitate sealing of the opening 211a after connecting the end cover 212 to the second opening portion 251.

In some embodiments, the end cover 212 is welded to a portion of the second opening portion 251 to form a second welding region, and the second welding region may be referred to as a weld mark.

In some embodiments, the second body portion 252 may be a structure with a uniform thickness, and a thickness at any position of the second body portion 252 may be a maximum thickness of the second body portion 252.

In some embodiments, the second thickened region 251a may be a structure with a uniform thickness or a structure with a variable thickness. When the second thickened region 251a is a structure with a uniform thickness, the maximum thickness of the second thickened region 251a is a thickness at any position of the second thickened region 251a. When the second thickened region 251a is a structure with a variable thickness, the maximum thickness of the second thickened region 251a is a thickness at a position with the maximum thickness of the second thickened region 251a.

Optionally, when the second thickened region 251a is a structure with a variable thickness, the thickness of the second thickened region 251a may gradually decrease from an end away from the second body portion 252 to an end close to the second body portion 252, and a region with the maximum thickness of the second thickened region 251a is located at the end away from the second body portion 252.

In some embodiments, the second transition region 251b may be a structure with a uniform thickness or a structure with a variable thickness. Optionally, the second transition region 251b is a structure with a uniform thickness, and the thickness of the second transition region 251b is a thickness at any position of the second transition region 251b.

The plurality of second thickened regions 251a are spaced apart in the circumferential direction of the opening 211a, so that the plurality of second thickened regions 251a and at least one second transition region 251b may be alternately arranged along the circumferential direction of the opening 211a. The number of the second thickened regions 251a may be greater than the number of the second transition regions 251b, or the number of the second thickened regions 251a may be equal to the number of the second transition regions 251b. For example, when the number of the second thickened regions 251a is two and the number of the second transition regions 251b is one, along the circumferential direction of the opening 211a, the second thickened region 251a, the second transition region 251b, and the second thickened region 251a are sequentially distributed.

In the above solution, the second wall 25 is adjacent to the first wall 24. The structure of the second wall 25 is similar to that of the first wall 24. The arrangement of the second thickened regions 251a can enhance the strength of the second opening portion 251, enhance the strength of the second wall 25, and further reduce the risk of cracking in the region of the housing body 211 near the welding position between the housing body 211 and the end cover 212. In addition, the plurality of second thickened regions 251a are spaced apart along the circumferential direction of the opening 211a, helping to reduce the difficulty of demolding the housing body 211 during processing and manufacturing, and reduce the manufacturing difficulty of the battery cell 20.

According to some embodiments of the present application, an area of an outer surface of the second wall 25 is smaller than an area of an outer surface of the first wall 24.

In the above solution, the area of the outer surface of the second wall 25 is smaller than the area of the outer surface of the first wall 24. The first wall 24 may be a large face of the housing body 211. The arrangement of the first thickened regions 241a and the second thickened regions 251a can reduce the risk of cracking in the region of the housing body 211 near the welding position between the housing body 211 and the end cover 212.

According to some embodiments of the present application, along the circumferential direction of the opening, a spacing between two adjacent second thickened regions is L₄, satisfying 2 mm ≤ L₄ ≤ 15 mm.

Optionally, L₄ may be but is not limited to 2 mm, 3 mm, 4 mm, 5 mm, 6 mm, 7 mm, 8 mm, 9 mm, 10 mm, 11 mm, 12 mm, 13 mm, 14 mm, 15 mm, or the like.

In the above solution, the spacing between two adjacent second thickened regions 251a satisfies the above relationship. Thus, on one hand, this can improve the strength of the second opening portion 251; and on the other hand, this can reduce the difficulty of demolding the housing body 211 during processing and manufacturing, facilitating demolding.

Optionally, 5 mm ≤ L₁ ≤ 10 mm.

According to some embodiments of the present application, along a third direction, a dimension of the second wall 25 is L₅, and a dimension of the second thickened region 251a is L₆, satisfying 0.1 * L₅ ≤ L₆ < 0.5 * L₅. The third direction is parallel to the thickness direction X of the first wall.

In the above solution, the dimension of the second thickened region 251a in the third direction satisfies the above relationship. Thus, on one hand, this can improve the strength of the second opening portion 251; and on the other hand, this can reduce the difficulty of demolding the housing body 211 during processing and manufacturing.

Optionally, 0.2 * L₅ ≤ L₆ ≤ 0.25 * L₅.

According to some embodiments of the present application, the thickness of the second body portion 252 is t₄, and the maximum thickness of the second thickened region 251a is t₅, satisfying 0.05 mm ≤ t₅ - t₄ ≤ t₄.

In the above solution, the difference between the maximum thickness of the second thickened region 251a and the thickness of the second body portion 252 satisfies the above relationship. Thus, on one hand, this allows the second thickened region 251a to have higher strength; and on the other hand, the space occupied by the second thickened region 251a is smaller, so that the battery cell 20 may have higher energy density.

Optionally, 0.2 mm ≤ t₅ - t₄ ≤ 0.8 * t₄.

According to some embodiments of the present application, 0.25 mm ≤ t₄ ≤ 1.25 mm.

According to some embodiments of the present application, 0.85 mm ≤ t₅ ≤ 1.85 mm.

Referring to FIG. 14, FIG. 14 is a schematic assembly diagram of an end cover and a second opening portion provided by some embodiments of the present application. According to some embodiments of the present application, the second body portion 252 has a third surface 252a facing the interior of the battery cell 20, and the second thickened region 251a protrudes from the third surface 252a.

In the above solution, the second thickened region 251a protrudes from the third surface 252a, so that a side of the second thickened region 251a facing away from the interior of the battery cell 20 may be parallel to a side of the second body portion 252 facing away from the interior of the battery cell 20, reducing the space occupied by the second thickened region 251a on the outer side of the battery cell 20 and reducing the risk of interference between the second thickened region 251a and other components.

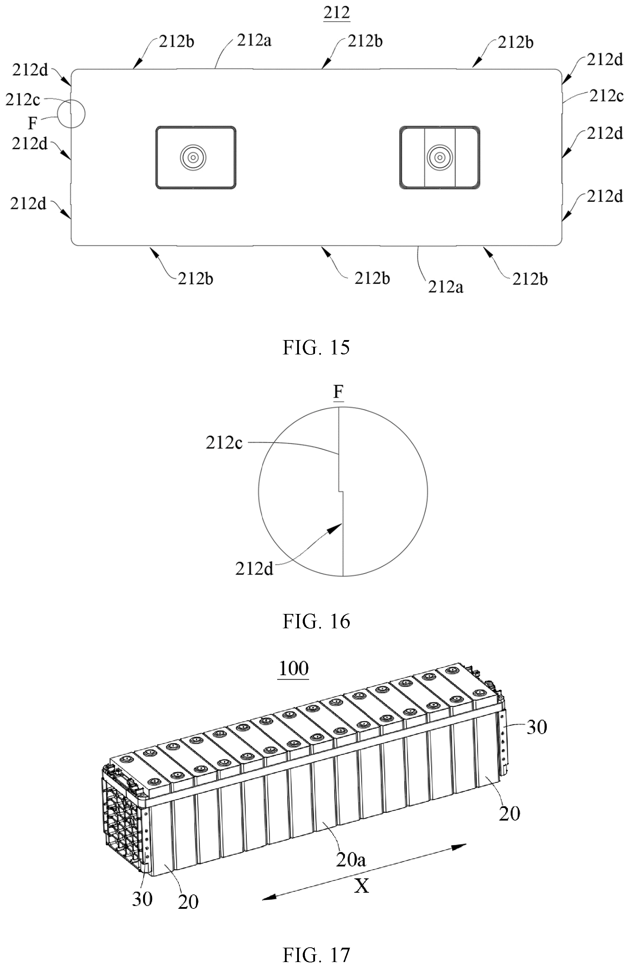

Referring to FIG. 14 and further referring to FIGs. 15 and 16, FIG. 15 is a schematic structural diagram of an end cover provided by some other embodiments of the present application; and FIG. 16 is a partially enlarged view at position F of FIG. 15. According to some embodiments of the present application, the end cover 212 is disposed in the opening 211a. The end cover 212 has a second side surface 212c facing the second opening portion 251. The second side surface 212c is provided with a second recessed region 212d corresponding to the second thickened region 251a. At least a portion of the second thickened region 251a is located in the second recessed region 212d.

The second recessed region 212d refers to a region of the end cover 212 corresponding to the second thickened region 251a. The second recessed region 212d is a recess formed on the second side surface 212c. In the thickness direction of the second wall 25, the second recessed region 212d is recessed in a direction facing away from the second wall 25 relative to other regions, so that at least a portion of the second thickened region 251a is located in the second recessed region 212d.

In the above solution, the arrangement of the second recessed region 212d can facilitate the fitting of the end cover 212 with the second wall 25 and facilitate the connection between the end cover 212 and the housing body 211.

According to some embodiments of the present application, the thickness of the first transition region 241b may be greater than the thickness of the first body portion 242.

According to some embodiments of the present application, the end cover 212 has a second surface 212e facing away from the interior of the battery cell 20. Along the first direction Z, a maximum distance between an end of the second thickened region 251a facing away from the second surface 212e and the second surface 212e is less than or equal to 10 mm.

The maximum distance between the end of the second thickened region 251a facing away from the second surface 212e and the second surface 212e is h₂, satisfying h₂ ≤ 10 mm.

The maximum distance between the end of the second thickened region 251a facing away from the second surface 212e and the second surface 212e refers to a maximum distance between an end of the second thickened region 251a close to the second body portion 252 and the second surface 212e along the first direction Z.

In the above solution, along the first direction Z, the maximum distance between the end of the second thickened region 251a facing away from the second surface 212e and the second surface 212e is less than or equal to 10 mm, which not only allows the second opening portion 251 to have higher strength to reduce the risk of cracking in the region of the housing body 211 near the welding position between the housing body 211 and the end cover 212, but also facilitates demolding of the housing body 211 during processing and manufacturing, facilitating processing and manufacturing.

According to some embodiments of the present application, the plurality of second thickened regions 251a include a second central thickened region. The second central thickened region extends along a third direction. The third direction is parallel to the thickness direction X of the first wall. The second central thickened region passes through a center of the second wall 25 in the third direction.

A center of the second central thickened region in the third direction can coincide with the center of the second wall 25 in the third direction, or the center of the second central thickened region in the third direction can not coincide with the center of the second wall 25 in the third direction.

Among the plurality of second thickened regions 251a, some second thickened regions 251a can be distributed at two ends of the second central thickened region in the third direction, so that a plurality of positions of the second wall 25 in the third direction are all thickened, improving the strength of the second opening portion 251.

In the above solution, the second central thickened region passes through the center of the second wall 25 in the third direction, so that a region near the center of the second wall 25 in the third direction has higher strength, facilitating reduction of the risk of cracking in the region of the housing body 211 near the welding position between the housing body 211 and the end cover 212.

According to some embodiments of the present application, the plurality of second thickened regions 251a are symmetrically arranged with respect to the center of the second wall 25 in the third direction.

In some embodiments, one of the plurality of second thickened regions 251a can pass through the center of the second wall 25 in the third direction. For example, the plurality of second thickened regions 251a may include a second central thickened region. The second central thickened region can pass through the center of the second wall 25 in the third direction.

In some embodiments, one of the at least one second transition region 251b can pass through the center of the second wall 25 in the third direction.

In the above solution, the arrangement manner of the plurality of second thickened regions 251a allows the second opening portion 251 to have higher strength, improving the welding strength between the second opening portion 251 and the end cover 212.

According to some embodiments of the present application, the thickness of the first transition region 241b is equal to the thickness of the first body portion 242.

In the above solution, the thickness of the first transition region 241b is equal to the thickness of the first body portion 242, facilitating processing and manufacturing.

According to some embodiments of the present application, the thickness of the second transition region 251b is equal to the thickness of the second body portion 252.

In the above solution, the thickness of the second transition region 251b is equal to the thickness of the second body portion 252, facilitating processing and manufacturing.

Referring to FIG. 4, according to some embodiments of the present application, two first walls 24 are provided. Two first walls 24 are disposed opposite each other in the third direction. The third direction is parallel to the thickness direction X of the first wall. The housing body 211 further includes a bottom wall 26 and two second walls 25 disposed opposite each other in the second direction Y. The two first walls 24 and the two second walls 25 enclose the opening 211a. Along the first direction Z, the bottom wall 26 is opposite the opening 211a. The first direction Z, the second direction Y, and the third direction are perpendicular to each other.

Two ends of the first wall 24 in the second direction Y are connected to the two second walls 25 respectively. Two ends of the second wall 25 in the third direction are connected to the two first walls 24 respectively. One end of the first wall 24 in the first direction Z is connected to the bottom wall 26. One end of the second wall 25 in the first direction Z is connected to the bottom wall 26, and the other end of the first wall 24 in the first direction Z and the other end of the second wall 25 in the first direction Z constitute the opening 211a.

In some embodiments, the two first walls 24, the two second walls 25, and the bottom wall 26 are integrally formed.

In the above solution, the bottom wall 26 is opposite the opening 211a. During assembly of the battery cell 20, the bottom wall 26 can support the electrode assembly 22, facilitating positioning of the electrode assembly 22.

According to some embodiments of the present application, the housing body 211 is a prismatic structure. The housing body 211 has two openings 211a. Two end covers 212 are provided. The two end covers 212 seal the two openings 211a respectively.

When the housing body 211 is a prismatic structure, the battery cell 20 may be a prismatic battery. In other embodiments, the housing body 211 may be a hexagonal prism, an octagonal prism, or the like.

When the positive electrode tab and the negative electrode tab are provided at two ends of the electrode assembly, the housing body 211 has two openings 211a. The positive electrode terminal and the negative electrode terminal can be provided on the two end covers 212 respectively to be electrically connected to the positive electrode tab and the negative electrode tab respectively, facilitating charging and discharging of the battery cell 20.

In the above solution, two ends of the housing body 211 are provided with openings 211a respectively. Two ends of the first wall 24 in the first direction Z are respectively provided with the first opening portions 241. The first opening portion 241 at each end in the first direction Z encloses the corresponding opening 211a. The arrangement of the first thickened regions 241a can enhance the strength of the housing body 211 near the opening 211a to reduce the risk of cracking in the region of the housing body 211 near the welding region between the housing body 211 and the end cover 212.

According to some embodiments of the present application, embodiments of the present application further provide a battery 100 including the battery cell 20 according to any one of the above embodiments.

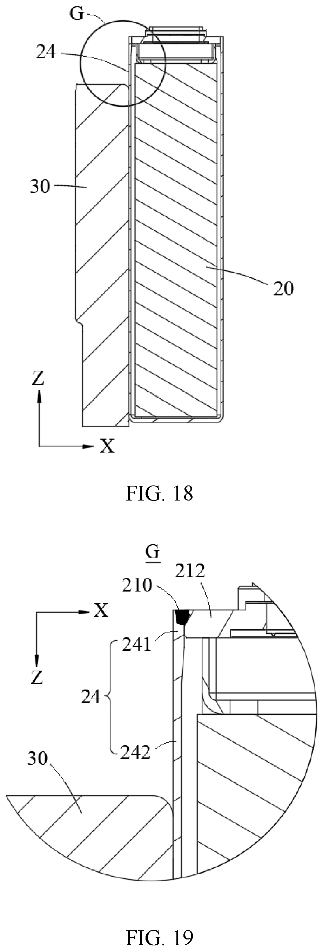

Referring to FIGs. 17 to 19, FIG. 17 is a schematic assembly diagram of an end plate and a plurality of battery cells provided by some embodiments of the present application, FIG. 18 is a schematic assembly diagram of an end plate and a battery cell provided by some embodiments of the present application, and FIG. 19 is a partially enlarged view at position G of FIG. 18. According to some embodiments of the present application, a plurality of battery cells 20 are provided. The plurality of battery cells 20 are stacked along a third direction to form a battery cell group 20a. The battery 100 further includes an end plate 30. Along the third direction, the end plate 30 is disposed at an end of the battery cell group 20a. Along a direction from the first body portion 242 to the first opening portion 241, at least a portion of the first opening portion 241 exceeds the end plate 30.

The plurality of battery cells 20 are stacked along the third direction. Along the third direction, the end plate 30 is disposed at the end of the battery cell group 20a. The end plate 30 is connected to the battery cell 20 located at the end in the third direction of the battery cell group 20a. The end plate 30 can limit the position of the battery cell 20 at the end and constrain deformation of the battery cell 20.

In the above solution, the end plate 30 is disposed at the end of the multiple battery cells 20 in the third direction. The end plate 30 has a larger connection area with the housing body 211 of a battery cell 20 adjacent thereto, forming a constraint on the housing body 211 and reducing the risk of cracking in a region of the housing body 211 near a welding position between the housing body 211 and the end cover 212.

According to some embodiments of the present application, the end plate 30 is disposed facing the first wall 24.

In the above solution, the end plate 30 is disposed facing the first wall 24, the end plate 30 has a larger contact area with the first body portion 242, and during charging and discharging cycles of the battery cell 20, the end plate 30 can constrain the first wall 24 to reduce the risk of cracking in the region of the housing body 211 near the welding position between the housing body 211 and the end cover 212.

According to some embodiments of the present application, embodiments of the present application further provide an electric device including the battery cell 20 or the battery 100 according to any one of the above embodiments, where the battery cell 20 or the battery 100 is configured to provide electrical energy.

The electric device can be any system or apparatus using the battery cell 20 or the battery described above, and the battery cell 20 or the battery 100 is configured to provide electrical energy.

According to some embodiments of the present application, embodiments of the present application further provide an energy storage apparatus including the battery cell 20 or the battery 100 according to any one of the above embodiments.

According to some embodiments of the present application, referring to FIGS. 3 to 14, embodiments of the present application provide a battery cell 20. The battery cell 20 is rectangular. The battery cell 20 includes a housing 21 and an electrode assembly 22. The electrode assembly 22 is disposed in the housing 21. The housing 21 includes a housing body 211 and an end cover 212. The housing body 211 has an opening 211a. The end cover 212 seals the opening 211a. The housing body 211 includes two first walls 24 disposed opposite each other along a third direction and two second walls 25 disposed opposite each other along a second direction Y. Two ends of the first wall 24 in the second direction Y are connected to the two second walls 25 respectively. An area of an outer surface of the first wall 24 is greater than an area of an outer surface of the second wall 25. The first wall 24 includes a first opening portion 241 and a first body portion 242 sequentially arranged along a first direction Z. The first direction Z is parallel to a thickness direction of the end cover 212. The first opening portion 241 is closer to the opening 211a than the first body portion 242. The end cover 212 is welded to the first opening portion 241. The first opening portion 241 includes a plurality of first thickened regions 241a and at least one first transition region 241b. The plurality of first thickened regions 241a are spaced apart along a circumferential direction of the opening 211a. Any two adjacent first thickened regions 241a are connected to each other through the first transition region 241b. A maximum thickness of the first thickened region 241a is greater than a thickness of the first body portion 242. The maximum thickness of the first thickened region 241a is greater than a thickness of the first transition region 241b. Along the circumferential direction of the opening 211a, a spacing between two adjacent first thickened regions 241a is L₁, satisfying 2 mm ≤ L₁ ≤ 15 mm.

In the battery cell 20 according to the embodiments of the present application, the thickening treatment of the first thickened region 241a can enhance the thickness of the first opening portion 241, so that the first opening portion 241 has higher strength, reducing the risk of cracking in a region of the housing body 211 near a welding position between the housing body 211 and the end cover 212. Along the circumferential direction of the opening 211a, the plurality of first thickened regions 241a are spaced apart, improving the strength of the first opening portion 241, reducing the difficulty of demolding the housing body 211 during processing and manufacturing, and reducing the manufacturing difficulty of the battery cell 20.

Although the present application has been described with reference to preferred embodiments, various improvements can be made thereto and components therein can be replaced with equivalents without departing from the scope of the present application. In particular, as long as there is no structural conflict, the technical features mentioned in the various embodiments can be combined in any manner. The present application is not limited to the specific embodiments disclosed in this specification, but includes all technical solutions falling within the scope of the claims.

## Claims

1. A battery cell, **characterized by** comprising:
a housing comprising a housing body and an end cover, wherein the housing body has an opening, the housing body comprises a first wall, the first wall comprises a first opening portion and a first body portion sequentially arranged along a first direction, the first direction is parallel to a thickness direction of the end cover, the first opening portion is closer to the opening than the first body portion, and the end cover is welded to the first opening portion to seal the opening;
wherein the first opening portion comprises a plurality of first thickened regions and at least one first transition region, the plurality of first thickened regions are spaced apart along a circumferential direction of the opening, two adjacent first thickened regions are connected to each other through the first transition region, a maximum thickness of the first thickened region is greater than a thickness of the first body portion, and the maximum thickness of the first thickened region is greater than a thickness of the first transition region.

2. The battery cell according to claim 1, **characterized in that** along the circumferential direction of the opening, a spacing between any two adjacent first thickened regions is greater than or equal to 2 mm, and the spacing between any two adjacent first thickened regions is less than or equal to 15 mm.

3. The battery cell according to claim 1 or 2, **characterized in that** along a second direction, a dimension of the first thickened region is greater than or equal to 0.1 times a dimension of the first wall, and the dimension of the first thickened region is less than or equal to 0.5 times the dimension of the first wall, wherein the second direction, the first direction, and a thickness direction of the first wall are perpendicular to each other.

4. The battery cell according to any one of claims 1 to 3, **characterized in that** a thickness direction of the first thickened region is parallel to a thickness direction of the first wall, a difference between the maximum thickness of the first thickened region and the thickness of the first body portion is greater than or equal to 0.05 mm, and the difference between the maximum thickness of the first thickened region and the thickness of the first body portion is less than or equal to the thickness of the first body portion.

5. The battery cell according to claim 4, **characterized in that** the maximum thickness of the first thickened region is greater than or equal to 0.25 mm, and the maximum thickness of the first thickened region is less than or equal to 2.4 mm.

6. The battery cell according to claim 4 or 5, **characterized in that** the thickness of the first body portion is greater than or equal to 0.2 mm, and the thickness of the first body portion is less than or equal to 1.2 mm.

7. The battery cell according to any one of claims 1 to 6, **characterized in that** the first body portion has a first surface facing the interior of the battery cell, and the first thickened region protrudes from the first surface.

8. The battery cell according to claim 7, **characterized in that** the end cover is disposed in the opening, the end cover has a first side surface facing the first opening portion, the first side surface is provided with a first recessed region corresponding to the first thickened region, and at least a portion of the first thickened region is located in the first recessed region.

9. The battery cell according to any one of claims 1 to 8, **characterized in that** the end cover has a second surface facing away from the interior of the battery cell, and along the first direction, a maximum distance between an end of the first thickened region facing away from the second surface and the second surface is less than or equal to 10 mm.

10. The battery cell according to any one of claims 1 to 9, **characterized in that** the plurality of first thickened regions comprise a first central thickened region, wherein the first central thickened region extends along a second direction, and the first central thickened region passes through a center of the first wall in the second direction; and the second direction, the first direction, and a thickness direction of the first wall are perpendicular to each other.

11. The battery cell according to any one of claims 1 to 10, **characterized in that** the plurality of first thickened regions are symmetrically arranged with respect to a center of the first wall in a second direction; and the second direction, the first direction, and a thickness direction of the first wall are perpendicular to each other.

12. The battery cell according to any one of claims 1 to 11, **characterized in that** the housing body further comprises a second wall, wherein the second wall is connected to the first wall, the end cover is connected to the second wall, the second wall comprises a second opening portion and a second body portion spaced apart along the first direction, the second opening portion is closer to the opening than the second body portion, and the end cover is welded to the second opening portion; and
the second opening portion comprises a plurality of second thickened regions and at least one second transition region, wherein the plurality of second thickened regions are spaced apart along the circumferential direction of the opening, two adjacent second thickened regions are connected to each other through the second transition region, a maximum thickness of the second thickened region is greater than a thickness of the second body portion, and the maximum thickness of the second thickened region is greater than a thickness of the second transition region.

13. The battery cell according to claim 12, **characterized in that** an area of an outer surface of the second wall is smaller than an area of an outer surface of the first wall.

14. The battery cell according to claim 12 or 13, **characterized in that** the second body portion has a third surface facing the interior of the battery cell, and the second thickened region protrudes from the third surface.

15. The battery cell according to claim 14, **characterized in that** the end cover is disposed in the opening, the end cover has a second side surface facing the second opening portion, the second side surface is provided with a second recessed region corresponding to the second thickened region, and at least a portion of the second thickened region is located in the second recessed region.

16. The battery cell according to any one of claims 1 to 15, **characterized in that** the thickness of the first transition region is equal to the thickness of the first body portion.

17. The battery cell according to any one of claims 1 to 16, **characterized in that** two first walls are provided, wherein the two first walls are disposed opposite each other in a third direction, and the third direction is parallel to a thickness direction of the first wall; and
the housing body further comprises a bottom wall and two second walls disposed opposite each other in a second direction, the two first walls and the two second walls enclose the opening, and along the first direction, the bottom wall is opposite the opening; wherein the first direction, the second direction, and the third direction are perpendicular to each other.

18. The battery cell according to any one of claims 1 to 17, **characterized in that** the housing body is a prismatic structure, the housing body has two openings, two end covers are provided, and the two end covers seal the two openings respectively.

19. A battery, **characterized by** comprising the battery cell according to any one of claims 1 to 18.

20. The battery according to claim 19, **characterized in that** a plurality of battery cells are provided, wherein the plurality of battery cells are stacked along a third direction to form a battery cell group, and the third direction is parallel to the thickness direction of the first wall; and the battery further comprises an end plate, wherein along the third direction, the end plate is disposed at an end of the battery cell group, and along a direction from the first body portion to the first opening portion, at least a portion of the first opening portion exceeds the end plate.

21. An electric device, **characterized by** comprising the battery cell according to any one of claims 1 to 18 or the battery according to any one of claims 19 and 20, wherein the battery cell or the battery is configured to provide electrical energy.

22. An energy storage apparatus, **characterized by** comprising the battery cell according to any one of claims 1 to 18 or the battery according to any one of claims 19 and 20.
